# EUROPÄISCHE PATENTSCHRIFT

(11) **EP 2 181 918 B1**
(45) Veröffentlichungstag und Bekanntmachung des Hinweises auf die Patenterteilung: **01.08.2012**
(21) Anmeldenummer: 09013560.9
(22) Anmeldetag: 28.10.2009
(51) Int. Cl.: B62K 25/08

(54) **Tauchrohreinheit für eine Federgabel**
Outer tube assembly for suspension fork
Ensemble de tube extérieur pour fourche de suspension

(30) Priorität: 29.10.2008 DE 102008053700
(43) Veröffentlichungstag der Anmeldung: 05.05.2010
(73) Patentinhaber: DT Swiss AG, 2500 Biel (CH)
(72) Erfinder: Achenbach, Martin, 2503 Biel (CH)
(74) Vertreter: Schütte, Hartmut

(56) Entgegenhaltungen:
- DE-U1- 29 807 801
- DE-U1-202008 004 987
- GB-A- 2 385 568
- US-A- 4 479 661
- US-A- 4 854 412
- US-B2- 6 607 185

## Beschreibung

Die vorliegende Erfindung betrifft eine Tauchrohreinheit für eine Federgabel insbesondere eines Fahrrads und vorzugsweise eine Tauchrohreinheit für eine Teleskopfedergabel.

Der Einsatz von Federgabeln an Fahrrädern ist grundsätzlich schon lange Zeit bekannt. In den letzten Jahren werden Federgabeln neben dem Einsatz an Downhill- und Mountain Bikes sowie an Crosscountry-Fahrrädern zunehmend auch an Alltagsfahrrädern verbaut.

Federgabeln weisen meist zwei mit Bezug zum Rahmen des Fahrrads feststehende Rohre, die sogenannten Standrohre und zwei untere bewegliche Rohre auf, an denen die Nabe des Laufrades befestigt ist. Die Standrohre werden durch eine Gabelbrücke oder Gabelkrone zusammengehalten, an denen mittig das Gabelschaftrohr befestigt ist. Die unteren beweglichen Rohre sind die sogenannten Tauchrohre bzw. Gleitrohre.

Um die beim Fahren auftretenden Belastungen aufnehmen zu können, werden die Tauchrohre meist durch einen Verbindungsbügel oberhalb des Radaufnahmeraums miteinander festverbunden, wobei der Verbindungsbügel als ein- oder zweiseitig offenes Profil ausgebildet ist, um den Produktionsprozess beim Druckgießen oder Schmieden zu ermöglichen. Zur Erhöhung der hohen Steifigkeit sind in dem z. B. U-förmigen Profil Verbindungsstege eingebracht, die zu versteifung gegen Torsionskräfte dienen.

Um die auftretenden Belastungen am Verbindungspunkt des Verbindungsstegs mit den beiden Tauchrohren aufnehmen zu können, sind dort Materialverdickungen vorgesehen, um ein Abreißen der Tauchrohre zu verhindern.

Solche Materialanhäufungen und Querstege tragen nicht unbeträchtlich zum Gesamtgewicht bei, welches bei modernen Fahrrädern eine erhebliche Rolle spielt.

Mit der GB 2 385 568 B ist deshalb eine einteilige Tauchrohreinheit für eine Fahrradgabel bekannt geworden, welche insgesamt vollständig aus einem faserverstärkten Material besteht. Mit dieser bekannten Tauchrohreinheit für eine Federgabel werden eine hohe Stabilität und ein geringes Gewicht erzielt. Die GB 2 385 568 A offenbart eine Tauchrohreinheit für eine Federgabel gemäß dem Oberbegriff von Anspruch 1.

Ein erheblicher Nachteil bei der bekannten Tauchrohreinheit für eine Federgabel ist allerdings der aufwendige Fertigungsprozess, bei dem händisch kleinere und größere Streifen und Segmente eines mit einem Matrixmaterial getränkten faserverstärkten Materials nacheinander auf eine Form aufgelegt werden müssen, die anschließend unter definierten Bedingungen unter einem Ofen aushärten muss. Dadurch wird bei dem Herstellungsprozess der bekannten Tauchrohreinheit sehr viel Arbeitszeit benötigt und außerdem lassen sich in einer Form nur sehr wenige Tauchrohreinheiten pro Tag herstellen, da wegen der Bearbeitungs-, Aufheiz- und Aushärtungszeit auch die nötige Abkühlzeit für das Werkzeug zu berücksichtigen ist.

Vor dem Hintergrund des bekannten Standes der Technik ist es deshalb die Aufgabe der vorliegenden Erfindung eine Tauchrohreinheit für eine Federgabel zur Verfügung zu stellen, bei welcher eine hohe Steifigkeit der Tauchrohreinheit bei einem relativ geringen Gewicht mit einem einfachen Herstellverfahren erzielbar ist.

Diese Aufgabe wird gelöst durch eine Tauchrohreinheit mit den Merkmalen des Anspruchs 1. Bevorzugte Weiterbildungen und Ausgestaltungen der Erfindung sind Gegenstand der Unteransprüche. Weitere vorteilhafte Merkmale und Eigenschaften der Erfindung ergeben sich aus den Ausführungsbeispielen.

Die erfindungsgemäße Tauchrohreinheit für eine Federgabel ist insbesondere für den Einsatz an einem Fahrrad vorgesehen und umfasst zwei voneinander beabstandete Tauchrohre und einen Radaufnahmeraum dazwischen. Weiterhin ist wenigstens ein Verbindungsbügel vorgesehen, der die beiden Tauchrohre oberhalb des Radaufnahmeraums miteinander verbindet. Der Verbindungsbügel weist einen Verbindungskörper auf, der in seiner Längserstreckung von dem einen Tauchrohr zu dem anderen Tauchrohr im Wesentlichen hohl ausgebildet ist. Der Verbindungskörper besteht aus wenigstens einem offenen Grundprofil und aus wenigstens einer die Öffnung des Grundprofils verschließenden Verstärkungseinrichtung.

Die erfindungsgemäße Tauchrohreinheit hat viele Vorteile. Ein erheblicher Vorteil der erfindungsgemäßen Tauchrohreinheit ist die Verbindung der beiden Tauchrohre durch einen insbesondere hohlen Verbindungskörper, der sich hohl von dem einen Tauchrohr zu dem anderen Tauchrohr erstreckt. Über eine solche Konstruktion wird eine hohe Steifigkeit und insbesondere eine hohe Torsionssteifigkeit der beiden Tauchrohre gegeneinander ermöglicht.

Durch die erfindungsgemäße Konstruktion, bei der der Verbindungskörper aus einem offenen Grundprofil und einer die Öffnung des Grundprofils verschließenden Verstärkungseinrichtung besteht, wird ein insgesamt geschlossener hohler Verbindungskörper hergestellt, der trotz seiner zwei- oder mehrteiligen Ausgestaltungen eine extrem hohe Belastbarkeit aufweist. Aufgrund der Konstruktion benötigt der Verbindungsbügel der erfindungsgemäßen Tauchrohreinheit keine den Hohlraum durchkreuzenden Verstärkungsrippen oder Wände. Bei Bedarf können solche Verstärkungen aber zusätzlich vorgesehen sein.

Trotz des hohl ausgestalteten Verbindungskörpers des Verbindungsbügels wird ein einfacher Herstellungsprozess für die erfindungsgemäße Tauchrohreinheit ermöglicht. In einem Gussverfahren können die beiden voneinander beabstandeten Tauchrohre und das Grundprofil des Verbindungsbügels in einem Stück gegossen werden, sodass die beiden Tauchrohre und das Grundprofil des Verbindungsbügels einstückig gefertigt sind. Das offene Grundprofil des Verbindungsbügels wird anschließend durch eine separate Verstärkungseinrichtung verschlossen, sodass der Verbindungsbügel einen insgesamt hohlen Verbindungskörper erhält, der für eine hohe Steifigkeit sorgt. Auch eine Produktion durch Schmieden ist möglich.

Mit zwei durch ein offenes Grundprofil einstückig verbundenen Tauchrohren wird eine besonders hohe Stabilität und Steifigkeit erzielt. Eine starke Materialanhäufung an den Verbindungspunkten des offenen Grundprofils mit den Tauchrohren ist nicht nötig, da dort der stetige Kraftfluss zwischen Tauchrohr und Verbindungskörper stattdessen über die hohle Ausformung der Gesamteinheit erfolgt.

Insbesondere ist die Tauchrohreinheit für eine als Teleskopfedergabel ausgebildete Federgabel vorgesehen.

Der Verbindungsbügel kann allgemein auch als Verbindungseinrichtung angesehen werden und stellt im Regelfall eine Verbindungsbrücke oder dergleichen dar, die die beiden Tauchrohre miteinander verbindet. Die Verbindung kann als im Wesentlichen gerade ausgerichtete Verbindungseinrichtung oder als ein Verbindungssteg ausgebildet sein oder aber insgesamt hufeisen- oder U-förmig ausgestaltet sein, wobei die Schenkel des U's sich in die Längsrichtung der Tauchrohre erstrecken.

In vorteilhaften Weiterbildungen umfasst die Verstärkungseinrichtung wenigstens ein Verstärkungsprofil. Ein solches Verstärkungsprofil kann unterschiedlich ausgestaltet sein. Möglich ist beispielsweise in einem einfachen Fall die Ausgestaltung als eine dünne Platte, welche an die Öffnung des offenen Grundprofils angepasst ist, um nach Auflegen auf die Öffnung des Grundprofils die Öffnung zu verschließen.

In vorteilhaften Weiterbildungen sind die Tauchrohre und das Grundprofil einstückig. Möglich ist es auch, dass das Grundprofil nur einstückig mit einem Tauchrohr ausgestaltet ist. Möglich und bevorzugt ist dann, dass die Verstärkungseinrichtung als z. B. Verstärkungsprofil ausgeführt ist und mit dem anderen Tauchrohr einstückig hergestellt ist. Vorzugsweise sind das Grundprofil und das Verstärkungsprofil in diesem Fall praktisch symmetrisch ausgebildet, sodass das Grundprofil und das Verstärkungsprofil zusammengefügt insgesamt mit den Tauchrohren die Tauchrohreinheit ergibt.

Eine solche Ausgestaltung weist erhebliche Vorteile auf, da die Tauchrohreinheit durch Zusammenfügen zweier etwa symmetrisch ausgebildeter Komponenten hergestellt wird, die beispielsweise über eines der bekannten Verfahren miteinander verbunden werden. Die einzelnen Komponenten können dabei durch ein Gießverfahren einfach und effizient hergestellt werden. Da große Verbindungsflächen zur Verbindung stehen, kann auf besondere Materialanhäufungen verzichtet werden, was das Gesamtgewicht verringert.

Vorteilhafterweise bestehen die Tauchrohre und/oder das Grundprofil aus einem Metall oder einer Metalllegierung. Insbesondere bestehen die Tauchrohre bzw. das Grundprofil aus einem Leichtmetall oder einer Leichtmetalllegierung. Besonders bevorzugt wird Aluminium oder Magnesium bzw. eine Legierung daraus als Material verwendet.

Insbesondere durch den Einsatz von Leichtmetallen und besonders bevorzugt durch den Einsatz von Magnesium werden hochfeste und hochstabile Tauchrohreinheiten ermöglicht, die durch die erfindungsgemäße Konstruktion hoch belastbar ausgeführt werden, wobei durch die Verwendung des hohl ausgebildeten Verbindungskörpers ein geringes Gewicht und eine einfache Fertigung erzielbar sind.

Vorzugsweise ist die Verstärkungseinrichtung und/oder wenigstes ein Verstärkungsprofil wenigstens teilweise aus Metall und insbesondere aus einem Leichtmetall oder einer Leichtmetalllegierung angefertigt. Besonders bevorzugt wird auch für die Verstärkungseinrichtung insgesamt oder für wenigstens ein Verstärkungsprofil eine Aluminium- und besonders bevorzugt eine Magnesiumlegierung eingesetzt. Möglich und bevorzugt ist es auch, dass die Verstärkungseinrichtung aus einem Faserverbundwerkstoff besteht.

In allen Ausgestaltungen weist das Grundprofil innen einen U-förmigen Querschnitt auf. Der Querschnitt kann auch V-förmig oder W-förmig gestaltet sein oder einen Querschnitt aufweisen, der einer solchen Form angelehnt ist. Ein derartiges Grundprofil ermöglicht eine hohe Torsionssteifigkeit in Verbindung mit der Verstärkungseinrichtung.

Das Verstärkungsprofil weist insbesondere einen flachen oder T-förmigen oder U-förmigen Querschnitt auf, um für eine hohe Torsionssteifigkeit und Belastbarkeit der Tauchrohreinheit zu sorgen.

In allen Weiterbildungen kann der Verbindungsbügel auf der Vorderseite vorgesehen sein. Möglich ist es auch, dass der Verbindungsbügel auf der Rückseite der Tauchrohre vorgesehen ist. In einer speziellen Ausgestaltung sind zwei Verbindungsbügel vorgesehen, von denen einer auf der Vorderseite und einer auf der Rückseite der Tauchrohre angeordnet sind. Dadurch wird eine besonders hohe Belastbarkeit und Steifigkeit erzielt.

Das offene Grundprofil kann seine Öffnung von den Tauchrohren nach vorn aufweisen oder das Grundprofil ist nach oben oder nach unten in Richtung auf das Ausfallende hin geöffnet ausgebildet.

In besonders bevorzugten Ausgestaltungen und Weiterbildungen der Erfindung können mehrere Verstärkungsprofile vorgesehen sein.

Es ist möglich, dass das Grundprofil und das Verstärkungsprofil bzw. wenigstens ein Verstärkungsprofil miteinander verschraubt sind. Dadurch wird eine zuverlässige und feste Verbindung hergestellt, die bei Bedarf auch wieder lösbar ist.

Bevorzugt ist auch ein Verkleben des Grundprofils und des Verstärkungsprofils bzw. wenigstens eines Verstärkungsprofils. Über Klebeverbindungen kann durch einfache Herstellungsmittel eine zuverlässige und dauerhaft sichere Verbindung hergestellt werden, die auch hohen und höchsten Ansprüchen genügt.

In einer weiteren besonders bevorzugten Ausgestaltung ist das Grundprofil wenigstens teilweise von wenigstens einer faserverstärkten Lage umgeben. Insbesondere werden faserverstärkte Gewebelagen eingesetzt. Es ist aber auch möglich, das Einzelfasern um das Grundprofil herumgewickelt werden, welche mit einem Harz- bzw. Matrixmaterial getränkt sind oder nach dem Umwickeln mit einem solchen Matrixmaterial versehen werden.

Nach dem Aushärten solcher faserverstärkten Lagen entsteht eine hochfeste und torsionssteife Tauchrohreinheit, die besonders bevorzugt aus Metall gefertigte Tauchrohre und ein aus Metall bestehendes Grundprofil aufweist, wobei das Verstärkungsprofil bzw. die Verstärkungseinrichtung aus einem faserverstärkten Material besteht.

Neben dem Einsatz von Gewebelagen und dem Umwickeln mit Einzelfasern ist auch der Einsatz von Geflechten, Faserfließen, Schnüren und dergleichen als Verstärkungsfasern möglich.

In weiteren bevorzugten Ausgestaltungen werden die Tauchrohre und das Grundprofil des Verbindungsbügels durch faserverstärkte Lagen umgeben. Eine solche Ausgestaltung hat den Vorteil, dass an den Tauchrohren und dem Verbindungsbügel die Wandstärke des metallischen Materials reduzierbar ist, sodass bei gleicher Festigkeit insgesamt Material und Gewicht eingespart werden können.

Dadurch, dass als Kern der Tauchrohre des Verbindungsbügels metallische Materialien eingesetzt werden, die beispielsweise in einem Gieß- oder Schmiedeprozess industriell hergestellt werden, kann der Herstellungsprozess erheblich vereinfacht und auch automatisierbar vorgesehen sein.

In allen Ausgestaltungen und Weiterbildungen der Tauchrohreinheit sind die Tauchrohre vorzugsweise zum gleitenden Kontakt mit den Standrohren der Federgabel vorgesehen.

Dabei ist es bevorzugt, dass die Right-Side-Up-Bauform vorliegt, bei der die dünneren in der Gabelbrücke der Federgabel befestigten Standrohre in die dickeren Tauchrohre eintauchen. Vorzugsweise werden die Standrohre mittels Gleitlager in den Tauchrohren gelagert.

In allen Ausgestaltungen ist vorzugsweise an den unteren Enden der Tauchrohre jeweils ein Ausfallende angeordnet, welche insbesondere zur Aufnahme eines Laufrades vorgesehen sind.

Weitere Vorteile und Anwendungsmöglichkeiten der vorliegenden Erfindung ergeben sich aus der Beschreibung von Ausführungsbeispielen, die nun mit Bezug auf die beiliegenden Figuren erläutert wird.

In den Figuren zeigen:
- Fig. 1: eine perspektivische Ansicht einer Federgabel mit einer erfindungsgemäßen Tauchrohreinheit;
- Fig. 2: eine perspektivische Ansicht der Tauchrohreinheit nach Fig. 1 vor der Montage;
- Fig. 3: eine perspektivische Ansicht des Bereichs des verbin- dungsbügels einer weiteren Tauchrohreinheit;
- Fig. 4: eine perspektivische Ansicht des Bereichs des Verbin- dungsbügels mit der Tauchrohreinheit nach Fig. 3 vor der Montage;
- Fig. 5: eine perspektivische Ansicht eines Verbindungsbereichs einer weiteren Tauchrohreinheit;
- Fig. 6: eine Ansicht der Tauchrohreinheit nach Fig. 5 vor der Montage;
- Fig. 7: eine für Fig. 7 den Bereich des Verbindungsbügels einer Tauchrohreinheit mit von oben vorgesehenen Schrauben;
- Fig. 8: den Bereich des Verbindungsbügels noch einer Tauchroh- reinheit;
- Fig. 9: den Bereich des Verbindungsbügels einer weiteren Tauch- rohreinheit vor der Montage;
- Fig. 10: den Bereich des Verbindungsbügels noch einer Tauch- rohreinheit vor der Montage;
- Fig. 11: den Bereich des Verbindungsbügels noch einer Tauch- rohreinheit vor der Montage;
- Fig. 12: den Verbindungsbereich einer weiteren Ausführungsform einer Tauchrohreinheit mit teilweise umwickeltem Grund- profil;
- Fig. 13: eine zweiteilige Tauchrohreinheit vor dem Verbinden;
- Fig. 14: den Verbindungsbereich einer weiteren Tauchrohreinheit; und
- Fig. 15: noch einen Verbindungsbereich einer weiteren Tauchroh- reinheit.

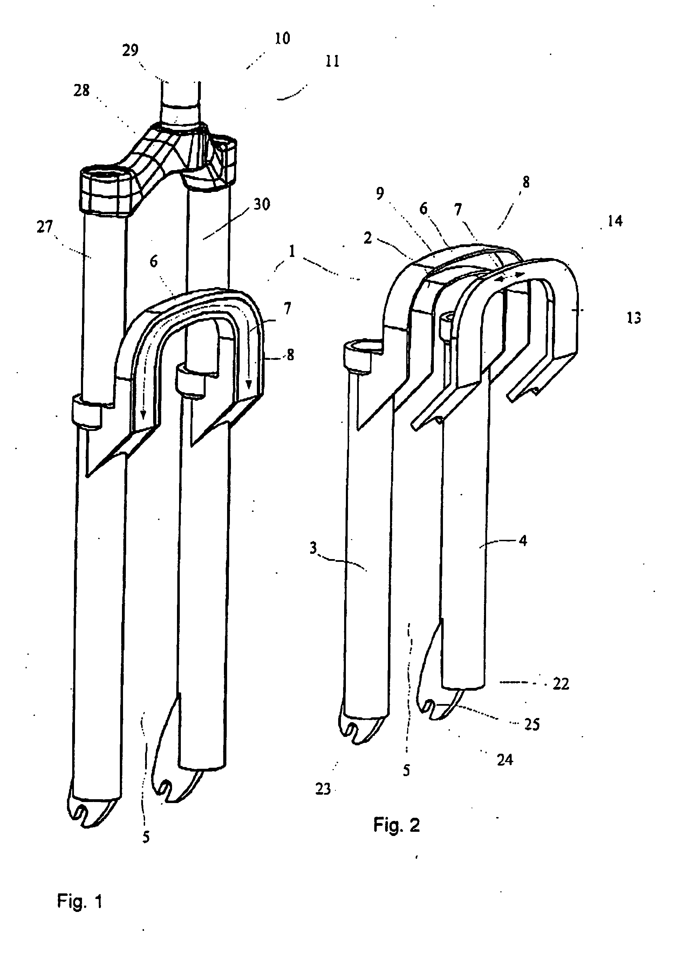

Mit Bezug auf die beiliegenden Figuren werden im Folgenden Ausführungsbeispiele von Tauchrohreinheiten 1 für Federgabeln 10 erläutert. Dabei ist die in Fig. 1 dargestellte Federgabel 10 als Teleskopfedergabel 11 ausgeführt.

Im oberen Bereich der Fig. 1 ist der Gabelschaft 29 zu sehen, der in der Gabelkrone 28 zentral befestigt ist. An den entgegengesetzten Enden der Gabelkrone 28 schließen sich nach unten die Standrohre 27 bzw. 30 an.

Die Federgabel 10 ist hier als Right-Side-Up-Federgabel ausgeführt, was bedeutet, dass die an der Gabelkrone 28 befestigten Standrohre 27 und 30 einen kleineren Außendurchmesser aufweisen als die Tauchrohre 3 und 4 der Tauchrohreinheit 1. Die Standrohre 27 und 30 tauchen beim Einfedern in die Tauchrohre 3 und 4 der Tauchrohreinheit 1 ein und werden in der Tauchrohreinheit 1 bzw. in den Tauchrohren 3 und 4 gleitend gelagert.

Zur Erhöhung der Stabilität sind die Tauchrohre 3 und 4 über einen Verbindungsbügel 6 miteinander verbunden, der im Ausführungsbeispiel gemäß den Fig. 1 und 2 aus einem Grundprofil 9 und einem als Verstärkungseinrichtung 13 dienenden Verstärkungsprofil 14 besteht.

Hier im Ausführungsbeispiel gemäß der Fig. 1 und 2 bestehen die Standrohre 3 und 4 und das Grundprofil 9 aus einer Magnesiumlegierung und sind einstückig in einem Gießverfahren hergestellt. Die Herstellung über ein Gießverfahren wird über das offene Grundprofil 9 ermöglicht, welches den Anforderungen an Fließrichtungen und Fließgeschwindigkeiten Rechnung trägt und für eine Herstellung in einem Massenproduktionsverfahren geeignet ist.

Wie in Fig. 2 deutlich zu erkennen, weist der hohl ausgebildete Verbindungskörper 8 des Verbindungsbügels 6 in seinem freien Querschnitt keine Querstrebe auf, die ansonsten bei bekannten Verbindungsbügeln von Federgabeln eingesetzt werden, um die nötige Steifigkeit zu erzielen. Hier wird die Steifigkeit durch das das offene Grundprofil 9 verschließende Verstärkungsprofil 14 hergestellt, welches bei der Montage fest mit dem Grundprofil 9 des Verbindungsbügels 6 zu einem hohl ausgebildeten Verbindungskörper 8 verbunden wird.

Die Verbindung des Grundprofils 9 mit der Verstärkungseinrichtung 13, die hier als Verstärkungsprofil 14 in Form einer im Wesentlichen flachen Platte ausgeführt ist, erfolgt im Ausführungsbeispiel nach den Fig. 1 und 2 vorzugweise über ein Klebeverfahren, welches zuverlässig und reproduzierbar dauerhaft die nötige Stabilität eines solchen Federgabel 10 bzw. Tauchrohreinheit 1 gewährleistet.

Am unteren Ende 22 der Tauchrohreinheit 1 sind die Ausfallenden 23 und 24 vorgesehen, die zur Aufnahme der Nabe eines Laufrades (nicht dargestellt) vorgesehen sind. Zwischen den Tauchrohren 3 und 4 ist unterhalb des Verbindungsbügels 6 ein Radaufnahmeraum vorgesehen. Dort ist in einem fertig montierten Zustand das Laufrad drehbar aufgenommen.

Die Öffnung 2 des Grundprofils 9 ist im Ausführungsbeispiel nach Fig. 2 vor der Endmontage zur Rückseite ausgerichtet.

Das Grundprofil 9 ist in dem Ausführungsbeispiel nach den Fig. 1 und 2 mit einem etwa U-förmigen Querschnitt versehen, wobei das Grundprofil 9 in einer Ansicht von hinten wiederum etwa U-förmig gestaltet ist. Die Schenkel des U's erstrecken sich dabei in Richtung der Tauchrohre 3 und 4.

Im Unterschied zu der Darstellung nach Fig. 2 kann das Verstärkungsprofil 14 nicht nur aus einer einzigen Verstärkungsplatte bestehen, sondern kann auch mehrere Elemente umfassen, die ineinander oder gleichzeitig mit dem offenen Grundprofil 9 verbunden werden, um die Tauchrohreinheit 1 fertigzustellen.

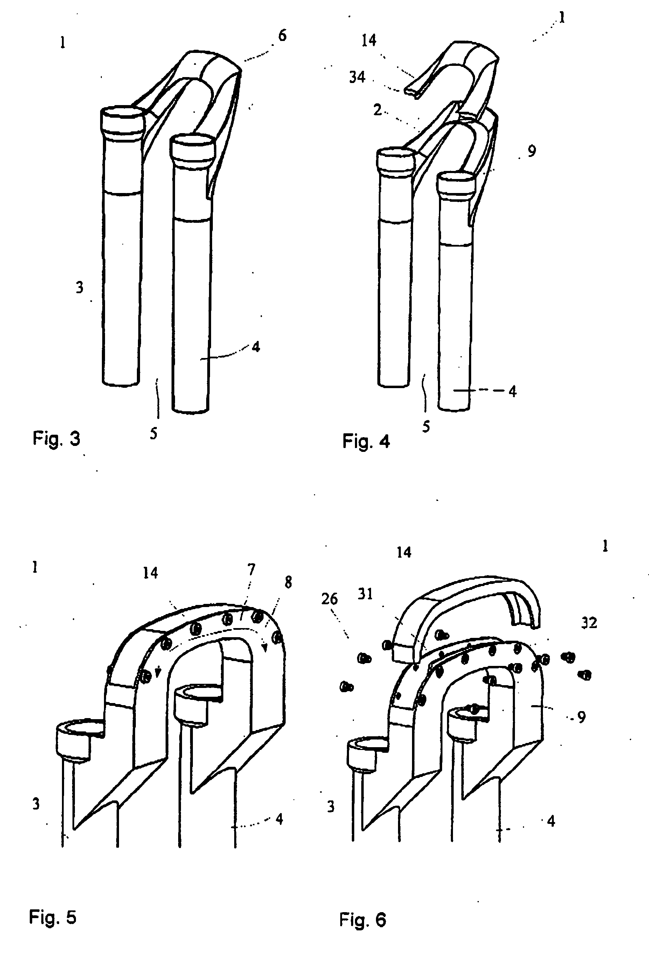

In den Fig. 3 und 4 ist ein zweites Ausführungsbeispiel dargestellt, bei dem im Unterschied zur Darstellung gemäß Fig. 2 die Öffnung des offenen Grundprofils vor der Endmontage nach oben ausgerichtet ist.

In Fig. 4 ist die Tauchrohreinheit 1 gemäß Fig. 3 vor der Endmontage dargestellt, wobei das Verstärkungsprofil 14 kurz vor dem Ansetzen auf das Grundprofil 9 abgebildet ist. Auch in dem Ausführungsbeispiel gemäß den Fig. 3 und 4 ist das Grundprofil 9 einstückig mit den Tauchrohren 3 und 4 geformt und besteht vorzugsweise aus einer Leichtmetallligierung und insbesondere aus einer Magnesiumlegierung. Die Herstellung erfolgt vorzugsweise in einem Gießprozess.

Das Verstärkungsprofil 14 weist quer zu seiner Längsrichtung 7 ebenfalls einen U-förmigen Querschnitt auf, um eine noch höhere Steifigkeit zu erzielen und um eine größere Klebefläche zwischen Verstärkungsprofil 14 und dem Grundprofil 9 zur Verfügung zu stellen. Rings um das Verstärkungsprofil 14 herum ist ein Steg 34 vorgesehen, der von der etwa flachen Oberfläche des Verstärkungsprofils 14 nach unten einige Milimeter absteht und im befestigten Zustand in das Grundprofil 9 eintaucht. Durch den Steg 34 wird eine größere Klebefläche zur Verfügung gestellt und die Steifigkeit nochmals erhöht.

Der Grundkörper 9 und das Verstärkungsprofils 14 des Verbindungsbügel 6 weisen schräg nach oben, wodurch eine ansprechende Gestaltung, eine hohe Stabilität und Funktionalität erreicht wird.

Bei dem Ausführungsbeispiel gemäß den Fig. 5 und 6 wird grundsätzlich eine ähnliche Struktur der Tauchrohreinheit 1 verwendet wie bei dem Ausführungsbeispiel nach den Fig. 3 und 4.

Im Unterschied zu den vorangegangen Ausführungsbeispielen wird hier das Verstärkungsorpfil 14 mit dem Grundprofil 9 nicht durch ein Klebeverfahren verbunden, sondern durch Schrauben 26, die hier von der Vorder- bzw. Rückseite der Tauchrohreinheit 1 in entsprechende Gewindelöcher 32 des Tauchprofils eingeschraubt werden.

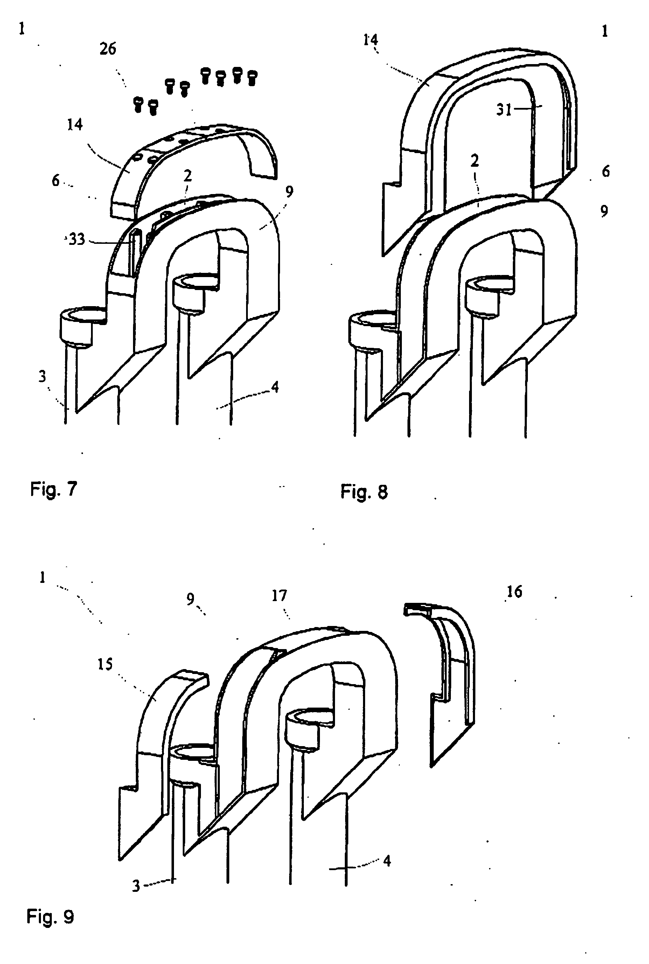

Fig. 7 zeigt in einer perspektivischen Ansicht den Bereich des Verbindungsbügels 6 kurz vor der Montage des Verstärkungsprofils 14 an dem Grundprofil 9. Hier ist das Grundprofil 9 mit einer Öffnung 2 nach oben hin versehen, sodass das Grundprofil 9 einen nach oben offenen Querschnitt aufweist. Zusätzlich können beispielsweise senkrecht ausgerichtete Stege an den Seitenwänden des Grundprofils vorgesehen sein, um eine zusätzliche Erhöhung der Steifigkeit und Stabilität zu bewirken.

Wie Fig. 6 entnommen werden kann, ist in der Öffnung 2 des Grundprofils 9 mittig zwischen den beiden Seitenwänden eine Verstärkungsrippe 31 an dem Grundprofil 9 vorgesehen, welche zusätzlich die Steifigkeit erhöht. Hier ergibt sich ein etwa W-förmiger Querschnitt des Grundprofils 9. Eine solche Verstärkungsrippe 31 kann auch in den zuvor beschriebenen Ausgestaltungen vorgesehen sein.

Wie in Fig. 7 dargestellt können Schrauben 26 von oben vorgesehen sein, um das Verstärkungsprofil 14 mit dem Grundprofil 9 zu verschrauben. Möglich ist aber auch der Einsatz von Klebestoff zusätzlich oder anstelle des Einsatzes von Schrauben 26, um die Verbindung herzustellen. Das Grundprofil 9 weist etwa senkrecht ausgerichtete Rippen oder Stege 33 auf, die zu Versteifung beitragen.

Fig. 8 zeigt den Bereich des Verbindungsbügels 6 vor dem Verbinden des Grundprofils 9 mit dem Verstärkungsprofil 14. Hier weist das Verstärkungsprofil 14 eine ebene Deckfläche und einen T-förmigen Querschnitt auf.

Die Verbindung des Verstärkungsprofils 14 mit dem Grundprofil 9 erfolgt insbesondere über ein Klebeverfahren. Gegebenenfalls kann das Verstärkungsprofil 14 auch an einem Grundprofil 9 angelötet oder angeschweißt werden.

Fig. 9 zeigt eine Variante des Ausführungsbeispiels nach Fig. 8, wobei hier zwei Verstärkungsprofile 15 und 16 und gegebenenfalls ein drittes Verstärkungsprofil 17 vorgesehen sein können.

In Fig. 9 ist an dem Grundprofil 9 ein Verstärkungsprofil 17 eingezeichnet, welches oben mittig zwischen den beiden Tauchrohren 3 und 4 angeordnet ist. Gegebenenfalls kann das hier mit 17 bezeichnete Element auch einstückig mit dem Grundprofil 9 und den beiden Tauchrohren 3 und 4 ausgestaltet und beispielsweise durch ein Gießverfahren hergestellt sein.

Bei der Montage werden die Verstärkungsprofile 15 und 16 mit dem Grundprofil 9 verbunden, sodass der Verbindungsbügel 6 einen hohl gestalteten Verbindungskörper 8 aufweist.

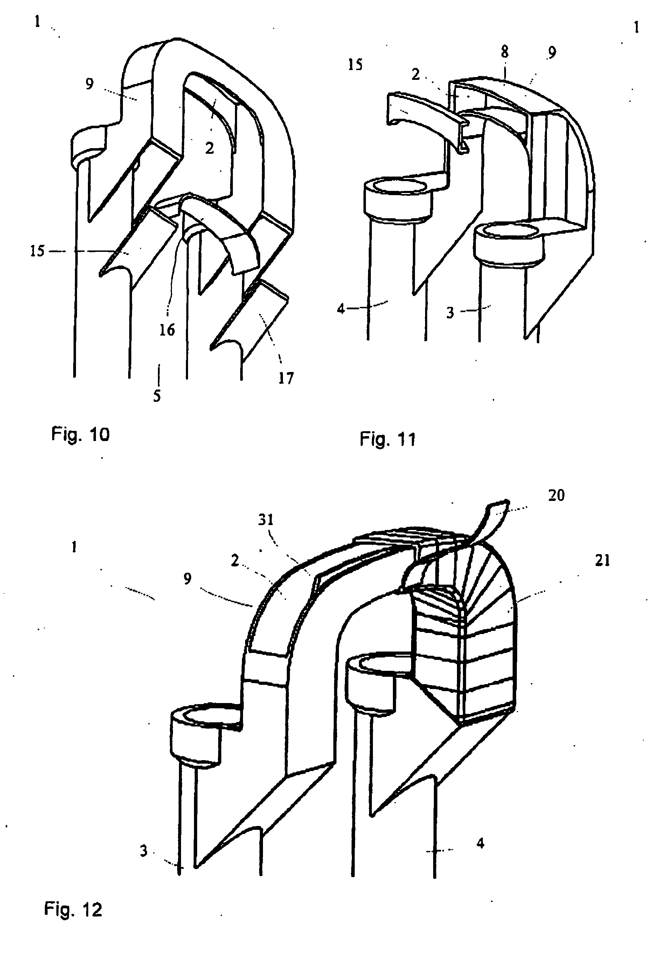

In Fig. 10 weist das Grundprofil 9 eine nach unten ausgerichtete Öffnung 2 auf. Zum Verschließen des offenen Grundprofils 9 werden von unten drei Verstärkungsprofile 15, 16 und 17 auf die jeweiligen Öffnungen 2 aufgebracht und beispielsweise durch Verkleben mit dem Grundprofil 9 verbunden.

Fig. 11 zeigt eine Variante, bei der die Öffnung 2 des Grundprofils 9 von dem Verbindungsbügel 6 aus in Richtung der Tauchrohre 3 und 4 ausgerichtet ist. Bei der Montage wird das Verstärkungsprofil 15 auf die Öffnung 2 des Grundprofils 9 aufgesetzt und damit verbunden, sodass der hohl ausgebildete Verbindungskörper 8 des Verbindungsbügels 6 entsteht.

Fig. 12 zeigt eine weitere bevorzugte Variante einer Tauchrohreinheit 1 für eine Federgabel 10, wobei hier die Tauchrohreinheit 1 insgesamt aus wenigstens zwei unterschiedlichen Materialien besteht. Vorzugsweise werden die Tauchrohre 3 und 4 mit dem Grundprofil 9 des Verbindungsbügels 6 einstückig aus einer Metalllegierung durch beispielsweise ein Gießverfahren hergestellt. Dabei kann die in der Öffnung 2 des Grundprofils erkennbare Rippe 31 zur Verstärkung vorgesehen sein.

Zum Verschließen der Öffnung 2 wird hier eine Verstärkungseinrichtung 13 eingesetzt, die aus faserverstärkten Lagen 20 besteht.

In dem dargestellten Ausführungsbeispiel werden Fasergewebelagen oder Gewebematten um das Grundprofil 9 herumgewickelt, um die Öffnung 2 zu verschließen. Dabei können die Gewebematten als sogenannte Prepregs ausgebildet sein, oder als trockene Verstärkungsfasern um das Grundprofil herumgewickelt werden und anschließend mit einem Verstärkungsharz oder dergleichen bestrichen werden.

Vorzugsweise wird die Verstärkungslage wenigstens zweifach und insbesondere mehrfach um das Grundprofil 9 herumgewickelt. Dabei kann eine bei jeder Lage teilweise überlappende Wicklung erfolgen.

In weiteren Ausgestaltungen ist es auch möglich, die Tauchrohre mit einem faserverstärktem Material zu umwickeln, sodass gegebenenfalls eine Verringerung der Wandstärken der Tauchrohre 3 und 4 möglich ist, ohne die Vorteile der vorliegenden Konstruktion zu verringern, da durch die einstückige Fertigung des Grundprofils 9 und der Tauchrohre 3 und 4 auch das Umwickeln mit Fasermatten einfach möglich ist.

Nach der Aushärtung in einem ofen oder dergleichen ist das Bauteil'fertig und stellt eine einfach hergestellte stabile sowie leichte Tauchrohreinheit für eine Federgabel 10 zur Verfügung.

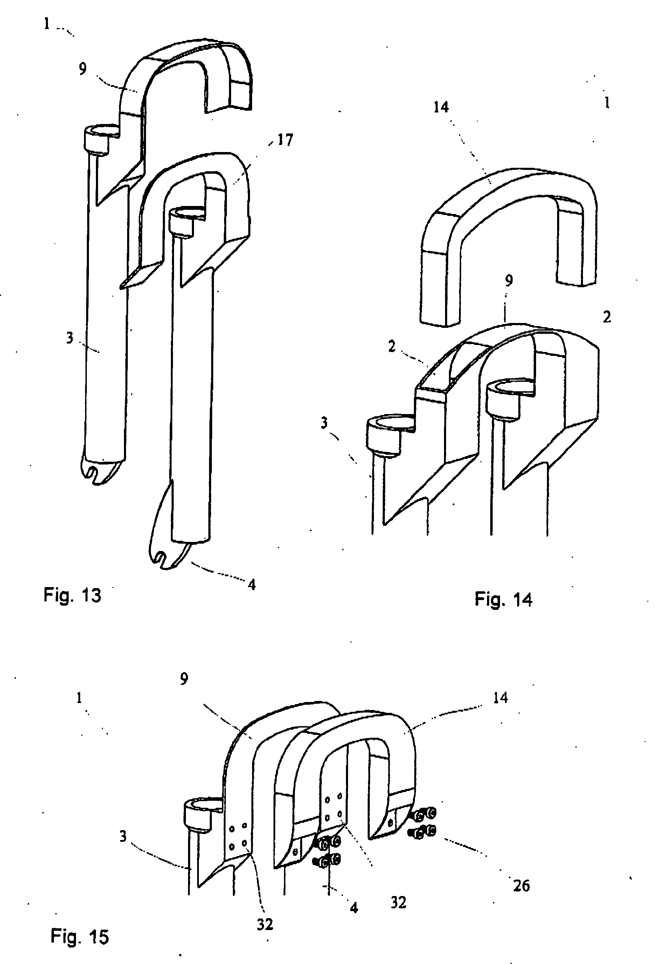

Bei dem in Fig. 13 dargestellten Ausführungsbeispiel werden jeweils Tauchrohre 3 und 4 mit einem jeweils daran angegossenem Grundprofil 9 bzw. Verstärkungsprofil 17 hergestellt. Anschließend werden die beiden Teile durch einen Klebevorgang miteinander verbunden. Durch die großflächige Verbindung wird eine besonders stabile Konstruktion ermöglicht.

Das in Fig. 14 dargestellte Ausführungsbeispiel weist ein Grundprofil 9 mit zwei nach oben ausgerichteten Öffnungen 2 auf, die von einem Verstärkungsprofil 14 verschlossen werden. Das Verstärkungsprofil weist hier einen rechteckigen Querschnitt auf und ist insgesamt etwa U-förmig gestaltet, damit die beiden Schenkel des U's in die Öffnungen 2 des Grundprofils 9 eintauchen. Auch andere Querschnittsformen sind möglich. Zur Verbindung wird insbesondere wieder ein Klebeverfahren eingesetzt.

Fig. 15 zeigt ein Ausführungsbeispiel, bei dem das Grundprofil 9 als flacher Streifen ausgebildet ist, der insbesondere einstückig mit den Tauchrohren 3 und 4 gefertigt ist. Ein insgesamt U-förmig gebogenes Vierkantprofil wird mit Schrauben 26 am Gewindelöchern 32 des Grundprofils 9 angebracht. Zusätzlich kann an ebenen Flächen noch Klebstoff aufgetragen werden, um die Festigkeit der Verbindung zu erhöhen.

Insgesamt stellt die Erfindung eine Tauchrohreinheit 1, sowie eine Federgabel 10 zur Verfügung, welche einfach herstellbar ist. Dabei ist ein niedriges Gesamtgewicht bei einer hohen Steifigkeit erreichbar. Durch den Einsatz von Metalllegierungen und ein Gießverfahren wird ein massenproduktionstechnisches Herstellverfahren ermöglicht, welches die Kosten senkt.

### Bezugszeichenliste:

- 1: Tauchrohreinheit
- 2: Öffnung
- 3: Tauchrohr
- 4: Tauchrohr
- 5: Radaufnahmeraum
- 6: Verbindungsbügel
- 7: Längserstreckung
- 8: Verbindungskörper
- 9: Grundprofil
- 10: Federgabel
- 11: Teleskop-Federgabel
- 12: Öffnung
- 13: Verstärkungseinrichtung
- 14: Verstärkungsprofil
- 15: Verstärkungsprofil
- 16: Verstärkungsprofil
- 17: Verstärkungsprofil
- 18: Vorderseite
- 19: Rückseite
- 20: faserverstärkte Lage
- 21: Verstärkungsprofil
- 22: untere Enden
- 23: Ausfallende
- 24: Ausfallende
- 25: Aufnahmeeinrichtung
- 26: Schraube
- 27: Standrohr
- 28: Gabelkrone
- 29: Gabelschaft
- 30: Standrohr
- 31: Rippe
- 32: Gewindeloch
- 33: Steg
- 34: Steg

## Patentansprüche

1. Tauchrohreinheit (1) für eine Federgabel (10), insbesondere für ein Fahrrad, umfassend zwei voneinander beabstandete Tauchrohre (3, 4) und einen Radaufnahmeraum (5) dazwischen, sowie wenigstens einen die beiden Tauchrohre (3, 4) oberhalb des Radaufnahmeraums (5) verbindenden Verbindungsbügel (6),
wobei der Verbindungsbügel (6) einen in seiner Längserstreckung (7) von dem einen Tauchrohr (3) zu dem anderen Tauchrohr (4) im Wesentlichen hohl ausgebildeten Verbindungskörper (8) aufweist,
**dadurch gekennzeichnet,**
**dass** der aus wenigstens einem offenen Grundprofil (9) und einer die Öffnung (2) des Grundprofils (9) verschließenden Verstärkungseinrichtung (13) besteht.

2. Tauchrohreinheit (1) nach Anspruch 1, wobei die Verstärkungseinrichtung (13) ein Verstärkungsprofil (14, 15, 16) umfasst.

3. Tauchrohreinheit (1) nach Anspruch 1 oder 2, wobei die Tauchrohre (3, 4) und das Grundprofil (9) einstückig sind.

4. Tauchrohreinheit (1) nach mindestens einem der vorhergehenden Ansprüche, wobei die Tauchrohre (3, 4) und/oder das Grundprofil (9) aus Metall und insbesondere einem Leichtmetall bestehen.

5. Tauchrohreinheit (1) nach mindestens einem der vorhergehenden Ansprüche, wobei die Verstärkungseinrichtung (13) und/oder das Verstärkungsprofil (14-17) aus Metall und insbesondere einem Leichtmetall besteht.

6. Tauchrohreinheit (1) nach mindestens einem der vorhergehenden Ansprüche, wobei das Grundprofil (9) einen U-förmigen Querschnitt aufweist.

7. Tauchrohreinheit (1) nach mindestens einem der vorhergehenden Ansprüche, wobei das Verstärkungsprofil (14-17) einen im Wesentlichen flachen oder T-förmigen Querschnitt aufweist.

8. Tauchrohreinheit (1) nach mindestens einem der vorhergehenden Ansprüche, wobei der Verbindungsbügel (6) auf der Vorderseite (18) vorgesehen ist.

9. Tauchrohreinheit (1) nach mindestens einem der vorhergehenden Ansprüche, wobei der Verbindungsbügel (6) auf der Rückseite (19) vorgesehen ist.

10. Tauchrohreinheit (1) nach mindestens einem der vorhergehenden Ansprüche, wobei das Grundprofil (9) nach vorne offen ist.

11. Tauchrohreinheit (1) nach mindestens einem der vorhergehenden Ansprüche, wobei das Grundprofil (9) nach oben oder unten offen ist.

12. Tauchrohreinheit (1) nach mindestens einem der vorhergehenden Ansprüche, wobei das Grundprofil (9) und das Verstärkungsprofil (13-17) miteinander verschraubt sind.

13. Tauchrohreinheit (1) nach mindestens einem der vorhergehenden Ansprüche, wobei das Grundprofil (9) und das Verstärkungsprofil (13-17) miteinander verklebt sind.

14. Tauchrohreinheit (1) nach mindestens einem der vorhergehenden Ansprüche, wobei das Grundprofil (9) mit faserverstärkten Lagen (20) umgeben ist.

15. Tauchrohreinheit (1) nach mindestens einem der vorhergehenden Ansprüche, wobei das Verstärkungsprofil (21) aus einem Faserverbundmaterial besteht.

## Claims

1. A slider tube unit (1) for a suspension fork (10), in particular for a bicycle, comprising two spaced-apart slider tubes (3, 4) and a wheel receiving space (5) in-between, and at least one connector bracket (6) connecting the two slider tubes (3, 4) above the wheel receiving space (5), wherein the connector bracket (6) comprises a connector body (8) configured substantially hollow in its longitudinal extension (7) from the one slider tube (3) to the other slider tube (4), **characterized in that** it consists of at least one open basic profile (9) and a reinforcing device (13) closing the opening (2) of the basic profile (9).

2. The slider tube unit (1) according to claim 1, wherein the reinforcing device (13) comprises a reinforcing profile (14, 15, 16).

3. The slider tube unit (1) according to claim 1 or 2, wherein the slider tubes (3, 4) and the basic profile (9) are integral.

4. The slider tube unit (1) according to at least one of the preceding claims, wherein the slider tubes (3, 4) and/or the basic profile (9) consist of metal and in particular of a light metal.

5. The slider tube unit (1) according to at least one of the preceding claims, wherein the reinforcing device (13) and/or the reinforcing profile (14 to 17) consist of metal and in particular of a light metal.

6. The slider tube unit (1) according to at least one of the preceding claims, wherein the basic profile (9) comprises a U-shaped cross-section.

7. The slider tube unit (1) according to at least one of the preceding claims, wherein the reinforcing profile (14 to 17) comprises a substantially flat or T-shaped cross-section.

8. The slider tube unit (1) according to at least one of the preceding claims, wherein the connector bracket (6) is provided at the front face (18).

9. The slider tube unit (1) according to at least one of the preceding claims, wherein the connector bracket (6) is provided at the rear face (19).

10. The slider tube unit (1) according to at least one of the preceding claims, wherein the basic profile (9) is forwardly open.

11. The slider tube unit (1) according to at least one of the preceding claims, wherein the basic profile (9) is upwardly or downwardly open.

12. The slider tube unit (1) according to at least one of the preceding claims, wherein the basic profile (9) and the reinforcing profile (13 to 17) are screwed to one another.

13. The slider tube unit (1) according to at least one of the preceding claims, wherein the basic profile (9) and the reinforcing profile (13 to 17) are glue-fixed to one another.

14. The slider tube unit (1) according to at least one of the preceding claims, wherein the basic profile (9) is enveloped in fiber-reinforced layers (20).

15. The slider tube unit (1) according to at least one of the preceding claims, wherein the reinforcing profile (21) consists of a fibrous composite material.

## Revendications

1. Ensemble de tubes plongeurs (1) pour une fourche de suspension (10), en particulier pour une bicyclette, comprenant deux tubes plongeurs (3, 4) écartés l'un de l'autre, et un espace de réception de roue (5) entre les deux, ainsi qu'au moins un dispositif connecteur en forme d'étrier (6) reliant les deux tubes plongeurs (3, 4) au-dessus de l'espace de réception de roue (5),
cet étrier de liaison (6) présentant un corps de liaison sensiblement creux (8), dans le prolongement (7) de l'un des tubes plongeurs (3) vers l'autre tube plongeur (4), **caractérisé en ce**
**que** celui-ci se compose au moins d'un profil de fond ouvert (9) et d'un dispositif de renforcement (13) bouchant l'ouverture (2) du profil de fond (9).

2. Ensemble de tubes plongeurs (1) selon la revendication 1, le dispositif de renforcement (13) comprenant un profil de renforcement (14, 15, 16).

3. Ensemble de tubes plongeurs (1) selon la revendication 1 ou 2, les tubes plongeurs (3, 4) et le profil de fond (9) étant d'un seul tenant.

4. Ensemble de tubes plongeurs (1) selon au moins l'une quelconque des revendications précédentes, les tubes plongeurs (3, 4) et/ou le profil de fond (9) étant en métal et plus particulièrement en métal léger.

5. Ensemble de tubes plongeurs (1) selon au moins l'une quelconque des revendications précédentes, le dispositif de renforcement (13) et/ou le profil de renforcement (14-17) étant en métal et plus particulièrement en métal léger.

6. Ensemble de tubes plongeurs (1) selon au moins l'une quelconque des revendications précédentes, le profil de fond (9) présentant une section transversale en forme de U.

7. Ensemble de tubes plongeurs (1) selon au moins l'une quelconque des revendications précédentes, le profil de renforcement (14-17) présentant une section transversale sensiblement plate ou en forme de T.

8. Ensemble de tubes plongeurs (1) selon au moins l'une quelconque des revendications précédentes, l'étrier de liaison (6) étant prévu sur la face avant (18).

9. Ensemble de tubes plongeurs (1) selon au moins l'une quelconque des revendications précédentes, l'étrier de liaison (6) étant prévu sur la face arrière (19).

10. Ensemble de tubes plongeurs (1) selon au moins l'une quelconque des revendications précédentes, le profil de fond (9) étant ouvert vers l'avant.

11. Ensemble de tubes plongeurs (1) selon au moins l'une quelconque des revendications précédentes, le profil de fond (9) étant ouvert vers le haut ou vers le bas.

12. Ensemble de tubes plongeurs (1) selon au moins l'une quelconque des revendications précédentes, le profil de fond (9) et le profil de renforcement (13-17) étant vissés l'un à l'autre.

13. Ensemble de tubes plongeurs (1) selon au moins l'une quelconque des revendications précédentes, le profil de fond (9) et le profil de renforcement (13-17) étant collés l'un à l'autre.

14. Ensemble de tubes plongeurs (1) selon au moins l'une quelconque des revendications précédentes, le profil de fond (9) étant enveloppé de couches (20) renforcées de fibres.

15. Ensemble de tubes plongeurs (1) selon au moins l'une quelconque des revendications précédentes, le profil de renforcement (21) se composant d'un matériau composite à base de fibres.
